# EUROPEAN PATENT APPLICATION

(11) **EP 4 834 662 A1**
(43) Date of publication of application: **04.11.2026**
(21) Application number: 24910499.3
(22) Date of filing: 27.11.2024
(51) Int. Cl.: B60Q 1/12

(54) **LAMPLIGHT CONTROL METHOD AND APPARATUS, AND VEHICLE AND STORAGE MEDIUM**

(30) Priority: 29.12.2023 CN 202311862214
(71) Applicant: Great Wall Motor Company Limited, Baoding, Hebei 071000 (CN)
(72) Inventor: LIU, Peng, Baoding, Hebei 071000 (CN); LI, Luxiang, Baoding, Hebei 071000 (CN); WANG, He, Baoding, Hebei 071000 (CN)
(74) Representative: Klunker IP Patentanwälte PartG mbB
(86) International application number: PCT/CN2024/134990
(87) International publication number: WO 2025/139566

(57) **Abstract**

A lamplight control method, comprising: when a headlamp of a vehicle is turned on, determining a turning radius of the vehicle in response to a steering operation of a steering wheel of the vehicle; on the basis of the turning radius, determining an offset distance by which lamplight irradiated by the headlamp is transversely moved; and controlling the lamplight to move in a target direction by the offset distance, wherein the target direction corresponds to a rotation direction of the steering wheel. Further provided are a lamplight control apparatus, a vehicle capable of executing the lamplight control method, and a computer-readable storage medium capable of implementing the lamplight control method. By means of the lamplight control method, a field-of-view blind area of a driver can be eliminated during turning of a vehicle, thereby ensuring safe traveling of the vehicle.

## Description

The present disclosure claims the priority to Chinese patent application No. 202311862214.5, entitled "LAMPLIGHT CONTROL METHOD AND APPARATUS, AND VEHICLE AND STORAGE MEDIUM", filed on December 29, 2023 with the China National Intellectual Property Administration, which is incorporated herein by reference in its entirety.

### TECHNICAL FIELD

The present disclosure relates to the field of vehicle, and in particular, to a method and apparatus for controlling light, a vehicle, and a storage medium in the field of vehicle.

### BACKGROUND

With the development of vehicle technology, vehicles are increasingly involved in our daily life and work. As people's activity time is postponed, the likelihood of using headlamps of vehicles also increases.

In the related art, a headlamp installed on a vehicle usually has a fixed illumination range. When the vehicle turns while traveling through a curved section of road at night, an illumination angle of the vehicle cannot be adjusted, which causes "a blind spot in a field of view" on an inner side of the curved section of road. This greatly threatens the driving safety of a driver.

Therefore, a method for controlling light is urgently required, to control light of the headlamp of the vehicle when the vehicle turns while traveling through the curved section of road at night, eliminate the driver's blind spot in his field of view, and ensure safe driving of the vehicle.

### SUMMARY

The present disclosure provides a method and apparatus for controlling light, a vehicle, and a storage medium. The method can eliminate a driver's blind spot in his field of view and ensure safe driving of a vehicle.

In a first aspect, the present disclosure provides a method for controlling light, and the method includes: determining, in response to a headlamp of a vehicle being turned on and a steering operation performed on a steering wheel of the vehicle being detected, a turning radius of the vehicle; determining, based on the turning radius, an offset distance by which light projected by the headlamp is shifted laterally; and controlling the light to shift by the offset distance in a target direction, where the target direction corresponds to a rotation direction of the steering wheel.

In the above technical solution, when the headlamp of the vehicle is turned on and the driver turns the steering wheel, the present disclosure determines the turning radius of the vehicle when turning, that is, a turning amplitude of the vehicle. Generally, under different turning amplitudes of the vehicle, a degree of deviation of the light projected by the headlamp during turning is different, and a range of "a blind spot in the field of view" formed on the inner side of the curve is also different. Therefore, the present disclosure can determine, based on the turning radius, the offset distance for laterally shifting the light, that is, determine the offset distance that can be used to eliminate the blind spot in the field of view, thereby correcting the light. Furthermore, the light is controlled to shift by the offset distance in the target direction corresponding to the rotation direction of the steering wheel, so that the light shifts by the offset distance toward the range of the "blind spot in the field of view". Therefore, through the solution of the present disclosure, the driver's blind spot in the field of view can be eliminated, and safe driving of the vehicle can be ensured.

With reference to the first aspect, in some possible implementations, determining, in response to the steering operation performed on the steering wheel of the vehicle being detected, the turning radius of the vehicle includes: determining, in response to the steering operation performed on the steering wheel being detected, a rotation angle of a wheel based on a rotation angle of the steering wheel and a transmission ratio between the steering wheel and the wheel; and determining the turning radius based on a wheelbase of the vehicle and the rotation angle of the wheel.

In the above technical solution, during turning of the vehicle, a ratio between the turning radius and the wheelbase of the vehicle is the same as a tangent value of the rotation angle of the wheel. In addition, the rotation angle of the wheel is related to the rotation angle of the steering wheel and the transmission ratio between the steering wheel and the wheel. Therefore, the rotation angle of the wheel can be determined first based on the rotation angle of the steering wheel and the transmission ratio between the steering wheel and the wheel; and then the turning radius can be determined based on the wheelbase of the vehicle and the rotation angle of the wheel.

With reference to the first aspect and the above implementations, in some possible implementations, determining, based on the turning radius, the offset distance by which the light projected by the headlamp is shifted laterally includes: determining the offset distance based on the turning radius and a first correspondence relationship, where the first correspondence relationship is a correspondence relationship between a reference turning radius and a reference offset distance during light shifting; or determining a product of the turning radius and a preset coefficient as the offset distance.

In the above technical solution, the offset distance for laterally shifting the light projected by the headlamp is determined in two ways, which can enrich the ways of obtaining the offset distance. The first correspondence relationship can be obtained through simulation, and verified through a simulated real-vehicle scenario. Therefore, an accurate offset distance can be obtained through the solution of the present disclosure.

With reference to the first aspect and the above implementations, in some possible implementations, the headlamp includes a plurality of lamp beads, and a part of the plurality of lamp beads is lit before the light is laterally shifted, where controlling the light to shift by the offset distance in the target direction includes: determining an adjustment distance from the lit part of the plurality of lamp beads based on an illumination distance of the headlamp, the offset distance and a focal length of the headlamp; determining target lamp beads from the plurality of lamp beads based on the lit part of the plurality of lamp beads, the target direction and the adjustment distance; and turning off the lit part of the plurality of lamp beads and then turning on the target lamp beads, to shift the light projected by the headlamp by the offset distance in the target direction.

In the above technical solution, the headlamp includes a plurality of lamp beads, the light projected by the headlamp is generated by lighting at least one lamp bead among the plurality of lamp beads, and before the light is laterally shifted, a part of the plurality of lamp beads is lit. Based on this, in order to shift the light by the offset distance in the target direction, in this solution, it is necessary to determine the adjustment distance by which the lit part of the plurality of lamp beads is shifted; then the target lamp beads are determined from the plurality of lamp beads based on the lit part of the plurality of lamp beads, the target direction and the adjustment distance; finally, the lit part of the plurality of lamp beads is turned off and the target lamp beads are lit, so as to shift the light projected by the headlamp. That is, when no turning is performed, the lit part of the plurality of lamp beads is lit; and when turning is performed, the lit part of the plurality of lamp beads is turned off and the target lamp beads are lit, so as to achieve the lateral shifting of the light projected by the headlamp. In addition, since the illumination distance of the headlamp, the offset distance, the focal length of the headlamp and the adjustment distance from the lit part of the plurality of lamp beads have a corresponding proportional relationship, the adjustment distance from the lit part of the plurality of lamp beads can be determined based on the illumination distance of the headlamp, the offset distance and the focal length of the headlamp.

With reference to the first aspect and the above implementations, in some possible implementations, determining the adjustment distance from the lit part of the plurality of lamp beads based on the illumination distance of the headlamp, the offset distance and the focal length of the headlamp includes: determining a first ratio between the focal length and the illumination distance; and setting a product of the first ratio and the offset distance as the adjustment distance.

In the above technical solution, a proportional relationship between the focal length of the headlamp and the adjustment distance is the same as a proportional relationship between the illumination distance of the headlamp and the offset distance. Therefore, the first ratio between the focal length and the illumination distance can be determined; and the product of the first ratio and the offset distance is determined as the adjustment distance.

With reference to the first aspect and the above implementations, in some possible implementations, turning on the target lamp beads includes: determining, from the target lamp beads, a first part of lamp beads for illuminating a first lane and a second part of lamp beads for illuminating a second lane where the vehicle travels, where the first lane is an inside lane of the second lane; and turning on the first part of lamp beads with a first brightness, and turning on the second part of lamp beads with a second brightness, where the first brightness is greater than the second brightness.

In the above technical solution, the first part of lamp beads among the target lamp beads illuminates the inside lane (the first lane) of the vehicle, and the second part of lamp beads among the target lamp beads illuminates the second lane where the vehicle travels. Generally, when the vehicle turns, the driver pays more attention to traffic conditions in the inside lane of the vehicle. Therefore, the driver needs a clearer field of view for the inside lane than for the second lane, so the first part of lamp beads can illuminate the first lane with a higher brightness. In this way, when the vehicle turns, the probability of collision between the vehicle and obstacles on the inside lane can be reduced.

With reference to the first aspect and the above implementations, in some possible implementations, determining, from the target lamp beads, the first part of lamp beads for illuminating the first lane and the second part of lamp beads for illuminating the second lane where the vehicle travels includes: determining, based on the turning radius, a second ratio between a quantity of lamp beads for illuminating the first lane and a quantity of lamp beads for illuminating the second lane; and determining the first part of lamp beads and the second part of lamp beads respectively from the target lamp beads based on the second ratio, the quantity of the target lamp beads, and a position of the first lane relative to the second lane.

In the above technical solution, when the vehicle turns, for different turning amplitudes, the front of the vehicle is biased differently toward different lanes. If the front of the vehicle is biased more toward the second lane, a blind spot in the field of view of the inside lane (the first lane) is relatively large, and more lamp beads are required to illuminate the inside lane. Therefore, the second ratio between the quantity of lamp beads for illuminating the first lane and the quantity of lamp beads for illuminating the second lane can be determined based on the turning radius. Then, the first part of lamp beads and the second part of lamp beads are respectively determined from the target lamp beads based on the second ratio, the quantity of the target lamp beads, and the position of the first lane relative to the second lane. This solution can accurately determine the first part of lamp beads for illuminating the first lane and the second part of lamp beads for illuminating the second lane.

With reference to the first aspect and the above implementations, in some possible implementations, determining the first part of lamp beads and the second part of lamp beads respectively from the target lamp beads based on the second ratio, the quantity of the target lamp beads, and the position of the first lane relative to the second lane includes: determining a first quantity of the first part of lamp beads and a second quantity of the second part of lamp beads based on the second ratio and the quantity of the target lamp beads; setting, in response to the first lane being on a left side of the second lane, lamp beads of a first quantity and located on the left side among the target lamp beads as the first part of lamp beads, and setting lamp beads other than lamp beads of the first quantity and located on the left side among the target lamp beads as the second part of lamp beads; and setting, in response to the first lane being on a right side of the second lane, lamp beads of a second quantity and located on the left side among the target lamp beads as the second part of lamp beads, and setting lamp beads other than lamp beads of the second quantity and located on the left side among the target lamp beads as the first part of lamp beads.

With reference to the first aspect and the above implementations, in some possible implementations, controlling the light to shift by the offset distance in the target direction includes: determining a target duration for laterally shifting the light projected by the headlamp based on a traveling speed of the vehicle and a second correspondence relationship between a reference speed and a reference duration during light shifting; and controlling the light to shift by the offset distance in the target direction within the target duration.

In the above technical solution, a completion time (the target duration) for shifting the light is controlled by a speed of the vehicle during turning. In this way, it can be achieved that: when the vehicle turns left at a relatively fast speed, the light is controlled to complete the leftward shifting within a relatively short duration; when the vehicle turns left at a relatively slow speed, the light is controlled to complete the leftward shifting within a relatively long duration. That is, the duration for completing the shifting of the light is adapted to the speed of the vehicle. This solution can avoid the driver feeling dizzy due to slow shifting when the speed of the vehicle is fast, and can also avoid potential driving safety hazards due to fast shifting when the speed of the vehicle is slow.

In a second aspect, the present disclosure provides an apparatus for controlling light, and the apparatus includes: a determination module, configured to: determine, in response to a headlamp of a vehicle being turned on and a steering operation performed on a steering wheel of the vehicle being detected, a turning radius of the vehicle; and determine, based on the turning radius, an offset distance by which light projected by the headlamp is shifted laterally; and a control module, configured to control the light to shift by the offset distance in a target direction, where the target direction corresponds to a rotation direction of the steering wheel.

With reference to the second aspect, in some possible implementations, the determination module is specifically configured to: determine, in response to the steering operation performed on the steering wheel being detected, a rotation angle of a wheel based on a rotation angle of the steering wheel and a transmission ratio between the steering wheel and the wheel; and determine the turning radius based on a wheelbase of the vehicle and the rotation angle of the wheel.

With reference to the second aspect and the above implementations, in some possible implementations, the determination module is specifically further configured to: determine the offset distance based on the turning radius and a first correspondence relationship, where the first correspondence relationship is a correspondence relationship between a reference turning radius and a reference offset distance during light shifting; or determine a product of the turning radius and a preset coefficient as the offset distance.

With reference to the second aspect and the above implementations, in some possible implementations, the headlamp includes a plurality of lamp beads, and a part of the plurality of lamp beads is lit before the light is laterally shifted, and the control module is specifically configured to: determine an adjustment distance from the lit part of the plurality of lamp beads based on an illumination distance of the headlamp, the offset distance and a focal length of the headlamp; determine target lamp beads from the plurality of lamp beads based on the lit part of the plurality of lamp beads, the target direction and the adjustment distance; and turn off the lit part of the plurality of lamp beads and then turn on the target lamp beads, to shift the light projected by the headlamp by the offset distance in the target direction.

With reference to the second aspect and the above implementations, in some possible implementations, the determination module is specifically further configured to: determine a first ratio between the focal length and the illumination distance; and set a product of the first ratio and the offset distance as the adjustment distance.

With reference to the second aspect and the above implementations, in some possible implementations, the control module is specifically further configured to: determine, from the target lamp beads, a first part of lamp beads for illuminating a first lane and a second part of lamp beads for illuminating a second lane where the vehicle travels, where the first lane is an inside lane of the second lane; and control the first part of lamp beads to be lit with a first brightness, and control the second part of lamp beads to be lit with a second brightness, where the first brightness is greater than the second brightness.

With reference to the second aspect and the above implementations, in some possible implementations, the determination module is specifically further configured to: determine, based on the turning radius, a second ratio between a quantity of lamp beads for illuminating the first lane and a quantity of lamp beads for illuminating the second lane; and determine the first part of lamp beads and the second part of lamp beads respectively from the target lamp beads based on the second ratio, the quantity of the target lamp beads, and a position of the first lane relative to the second lane.

With reference to the second aspect and the above implementations, in some possible implementations, the determination module is specifically further configured to: determine a first quantity of the first part of lamp beads and a second quantity of the second part of lamp beads based on the second ratio and the quantity of the target lamp beads; set, in response to the first lane being on a left side of the second lane, lamp beads of a first quantity and located on the left side among the target lamp beads as the first part of lamp beads, and set lamp beads other than lamp beads of the first quantity and located on the left side among the target lamp beads as the second part of lamp beads; and set, in response to the first lane being on a right side of the second lane, lamp beads of a second quantity and located on the left side among the target lamp beads as the second part of lamp beads, and set lamp beads other than lamp beads of the second quantity and located on the left side among the target lamp beads as the first part of lamp beads.

With reference to the second aspect and the above implementations, in some possible implementations, the control module is specifically further configured to: determine a target duration for laterally shifting the light projected by the headlamp based on a traveling speed of the vehicle and a second correspondence relationship between a reference speed and a reference duration during light shifting; and control the light to shift by the offset distance in the target direction within the target duration.

In a third aspect, the present disclosure provides a vehicle, including a memory and a processor. The memory is configured to store executable program code, and the processor is configured to call and execute the executable program code from the memory, so that the vehicle performs the method of the first aspect or any one of the possible implementations of the first aspect.

In a fourth aspect, the present disclosure provides a computer-readable storage medium, where the computer-readable storage medium stores computer program code, and when the computer program code is executed on a computer, the computer is caused to perform the method of the first aspect or any one of the possible implementations of the first aspect.

### BRIEF DESCRIPTION OF THE DRAWINGS

FIG. 1 is a scenario diagram of a vehicle turning in the related art according to an embodiment of the present disclosure;
FIG. 2 is a schematic flowchart of a method for controlling light according to an embodiment of the present disclosure;
FIG. 3 is a schematic diagram of a turning radius according to an embodiment of the present disclosure;
FIG. 4 is a structural schematic diagram of a headlamp according to an embodiment of the present disclosure;
FIG. 5 is a schematic diagram of determining target lamp beads according to an embodiment of the present disclosure;
FIG. 6 is a schematic diagram of laterally shifting light according to an embodiment of the present disclosure;
FIG. 7 is a structural schematic diagram of an apparatus for controlling light according to an embodiment of the present disclosure; and
FIG. 8 is a structural schematic diagram of a vehicle according to an embodiment of the present disclosure.

### DETAILED DESCRIPTION OF THE EMBODIMENTS

The technical solutions in the present disclosure will be clearly and thoroughly described below with reference to the accompanying drawings. In the description of the embodiments of the present disclosure, unless otherwise stated, "/" means "or", for example, A/B can mean A or B; "and/or" in the text is merely an association relationship describing associated objects, indicating that three relationships may exist, for example, A and/or B can mean: A alone, both A and B, and B alone. In addition, in the description of the embodiments of the present disclosure, "a plurality of" means two or more than two.

Hereinafter, the terms "first" and "second" are used for descriptive purposes only, and cannot be understood as indicating or implying relative importance or implicitly indicating the quantity of the indicated technical features. Therefore, features defined with "first" and "second" may explicitly or implicitly include one or more of the features.

In daily driving, curved sections of road are often encountered. In addition to terrain factors, a curved section of road can also ensure the driving safety of a driver. When driving a vehicle on a straight section of road for a long time, the driver is prone to distraction due to monotony, or even fatigue driving, which may cause traffic accidents and the like.

In a driving scene with poor visibility, the driver will turn on a headlamp on the vehicle to see a road condition ahead clearly and ensure the driving safety. In the related art, a headlamp installed on a vehicle usually has a fixed illumination range. This makes it impossible to adjust an illumination angle of the vehicle when the vehicle turns while traveling through a curved section of road at night, which causes "a blind spot in the field of view" on an inner side of the curve. This greatly threatens the driving safety of the driver.

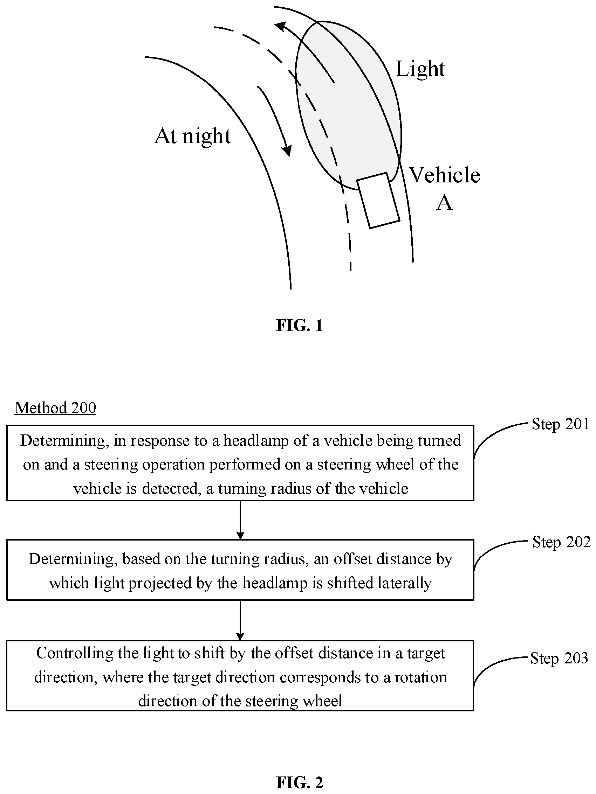

FIG. 1 is a scenario diagram of a vehicle turning in the related art according to an embodiment of the present disclosure. Exemplarily, as shown in FIG. 1, a schematic diagram of vehicle A turning while traveling through a curved section of road of a two-way two-lane road at night is shown. It can be seen from FIG. 1 that the light projected by the headlamp of vehicle A cannot cover an adjacent inside lane of vehicle A, and the driver of vehicle A has "a blind spot in the field of view". In this case, if an oncoming vehicle is traveling towards vehicle A in the blind spot, vehicle A cannot avoid it in time. This may cause vehicle A to collide with the oncoming vehicle.

In order to solve the above problem, the present disclosure provides a method for controlling light. Details are referred to FIG. 2. FIG. 2 is a schematic flowchart of a method for controlling light according to an embodiment of the present disclosure.

The method for controlling light provided by the embodiment of the present disclosure is applied to the vehicle shown in FIG. 1. Specifically, the method for controlling light can be applied to a target controller in the vehicle, and the target controller is any one of a vehicle control unit or a body domain controller in the vehicle. The body domain controller is configured to control vehicle components in the vehicle. When the target controller is the body domain controller, the vehicle component is the headlamp.

Exemplarily, as shown in FIG. 2, the method 200 includes the following steps.

In step 201, the vehicle control unit determines, in response to a headlamp of a vehicle being turned on and a steering operation performed on a steering wheel of the vehicle being detected, a turning radius of the vehicle.

The "headlamp" in the above step 201 includes high beam and low beam on both sides of the front of the vehicle. The "turning radius" in the above step 201 refers to a trajectory circle radius of a center plane of an outer steered wheel of the vehicle on a vehicle supporting plane during turning of the vehicle.

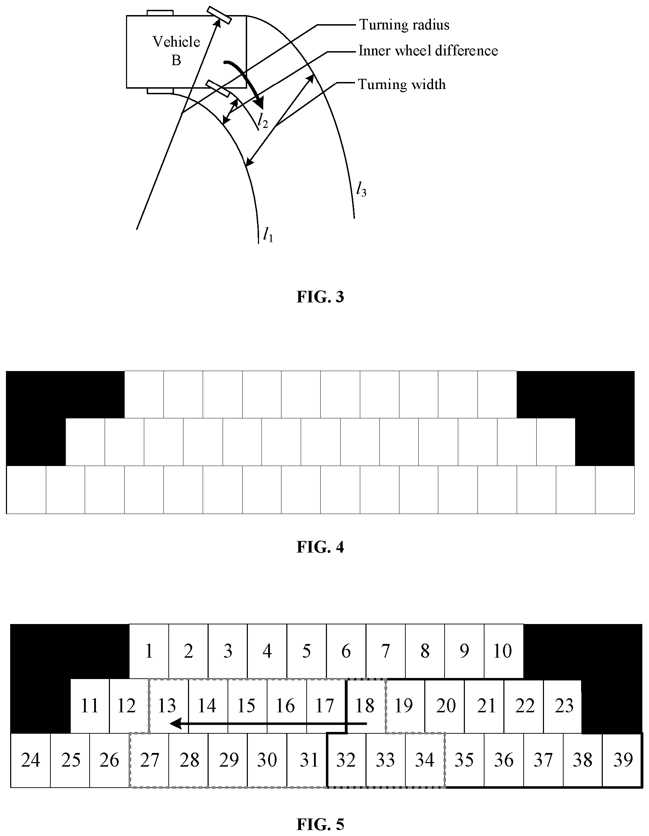

FIG. 3 is referred to in the following. FIG. 3 is a schematic diagram of a turning radius according to an embodiment of the present disclosure. Exemplarily, as shown in FIG. 3, during a procedure of a steering wheel of vehicle B turning right, the outer steered wheel (a left front wheel) and a right front wheel turn right to meet a right turning requirement of the vehicle. A traveling trajectory of a right rear wheel is route *l₁*, a traveling trajectory of the right front wheel is route *l₂*, a traveling trajectory of the left front wheel is route *l₃*, a trajectory circle radius corresponding to route *l₃* is the turning radius, a distance between route *l₁* and route *l₂* is an inner wheel difference, and a distance between route *l₁* and route *l₃* is a turning width.

In a possible implementation, the vehicle control unit determining, in response to the steering operation performed on the steering wheel of the vehicle being detected, the turning radius of the vehicle in step 201 includes: the vehicle control unit determines, in response to the steering operation performed on the steering wheel being detected, a rotation angle of a wheel based on a rotation angle of the steering wheel and a transmission ratio between the steering wheel and the wheel; and the vehicle control unit determines the turning radius based on a wheelbase of the vehicle and the rotation angle of the wheel.

The wheelbase in the above solution is a distance between a front axle center and a rear axle center of the vehicle. The front wheel is configured for steering of the vehicle. Therefore, the wheel in the above solution refers to the front wheel in the vehicle.

In the above technical solution, during turning of the vehicle, a ratio between the turning radius and the wheelbase of the vehicle is the same as a tangent value of the rotation angle of the wheel. In addition, the rotation angle of the wheel is related to the rotation angle of the steering wheel and the transmission ratio between the steering wheel and the wheel. Therefore, the rotation angle of the wheel can be determined first based on the rotation angle of the steering wheel and the transmission ratio between the steering wheel and the wheel; and then the turning radius can be determined based on the wheelbase of the vehicle and the rotation angle of the wheel.

In some embodiments, the vehicle control unit determining the rotation angle of the wheel based on the rotation angle of the steering wheel and the transmission ratio between the steering wheel and the wheel includes: the vehicle control unit sets a ratio of the rotation angle of the steering wheel to the transmission ratio as the rotation angle of the wheel.

In some embodiments, the vehicle control unit determining the turning radius based on the wheelbase of the vehicle and the rotation angle of the wheel includes: the vehicle control unit takes a tangent value of the rotation angle of the wheel as a first value; and the vehicle control unit sets a ratio of the wheelbase to the first value as the turning radius.

In step 202, the vehicle control unit determines, based on the turning radius, an offset distance by which light projected by the headlamp is shifted laterally.

A turning direction of the vehicle includes a left turning direction or a right turning direction. In the related art, for the driver, when the vehicle turns left, "the blind spot in the field of view" will be formed on a left front area of the vehicle, and the light projected by the headlamp can be shifted leftward in a horizontal direction. In this case, the lateral shifting refers to shifting leftward in the horizontal direction. For the driver, when the vehicle turns right, "the blind spot in the field of view" will be formed on a right front area of the vehicle, and the light projected by the headlamp can be shifted rightward in the horizontal direction. In this case, the lateral shifting refers to shifting rightward in the horizontal direction.

The "offset distance" in the above step 202 refers to a distance for correcting the light in a target direction in order to eliminate the "blind spot in the field of view", and the target direction corresponds to a rotation direction of the steering wheel. Specifically, when the rotation direction of the steering wheel is a clockwise direction, the target direction is a rightward direction; when the rotation direction of the steering wheel is a counterclockwise direction, the target direction is a leftward direction.

In a possible implementation, step 202 includes: the vehicle control unit determines the offset distance based on the turning radius and a first correspondence relationship, where the first correspondence relationship is a correspondence relationship between a reference turning radius and a reference offset distance during light shifting; or the vehicle control unit determines a product of the turning radius and a preset coefficient as the offset distance.

The "first correspondence relationship" in the above solution can be obtained through simulation, and verified through a simulated real-vehicle scenario. Specifically, in a real-vehicle scenario, when a first vehicle turns left in its own lane with a first reference turning radius, the light projected by the headlamp of the first vehicle is shifted leftward by a first reference offset distance corresponding to the first reference turning radius. It is determined whether there is a blind spot in the field of view in an adjacent lane (inside lane) on a left side of the own lane when the first vehicle turns left. If there is no blind spot in the field of view in the adjacent lane, it is determined that the correspondence relationship between the first reference turning radius and the first reference offset distance is verified.

The larger the turning radius, the larger the offset distance; the smaller the turning radius, the smaller the offset distance.

The "preset coefficient" in the above solution can be obtained through an average of a plurality of ratios between a plurality of turning radii and a plurality of corresponding offset distances from a plurality of real-vehicle tests.

In the above technical solution, the offset distance for laterally shifting the light projected by the headlamp is determined in two ways, which can enrich the ways of obtaining the offset distance. The first correspondence relationship can be obtained through simulation, and verified through a simulated real-vehicle scenario. Therefore, an accurate offset distance can be obtained through the solution of the present disclosure.

In step 203, the vehicle control unit controls the light to shift by the offset distance in a target direction, where the target direction corresponds to a rotation direction of the steering wheel.

"The target direction corresponds to the rotation direction of the steering wheel" in the above step 203 means that the target direction can be determined by the rotation direction of the steering wheel. The rotation direction of the steering wheel is a clockwise direction or a counterclockwise direction. When the rotation direction of the steering wheel is a clockwise direction, the target direction is a rightward direction; when the rotation direction of the steering wheel is a counterclockwise direction, the target direction is a leftward direction.

In some embodiments, the headlamp includes a left headlamp and a right headlamp of the vehicle, and step 203 includes: the vehicle control unit controls light projected by the left headlamp and light projected by the right headlamp to shift by the offset distance in the target direction.

In other embodiments, the rotation direction of the steering wheel is a clockwise direction, and step 203 includes: the vehicle control unit controls the light projected by the right headlamp to shift by the offset distance rightward.

The above solution describes: when the headlamps (the left headlamp and the right headlamp of the vehicle) of the vehicle are turned on, the vehicle control unit determines the turning radius of the vehicle in response to a clockwise steering operation performed on the steering wheel of the vehicle being detected; the vehicle control unit determines, based on the turning radius, the offset distance by which the light projected by the right headlamp is shifted laterally; and the vehicle control unit controls the light projected by the right headlamp to shift by the offset distance rightward, where the light projected by the left headlamp does not shift laterally.

In other embodiments, the rotation direction of the steering wheel is a counterclockwise direction, and step 203 includes: the vehicle control unit controls the light projected by the left headlamp to shift by the offset distance leftward.

The above solution describes: when the headlamps (the left headlamp and the right headlamp of the vehicle) of the vehicle are turned on, the vehicle control unit determines the turning radius of the vehicle in response to a counterclockwise steering operation performed on the steering wheel of the vehicle being detected; the vehicle control unit determines, based on the turning radius, the offset distance by which the light projected by the left headlamp is shifted laterally; and the vehicle control unit controls the light projected by the left headlamp to shift by the offset distance leftward, where the light projected by the right headlamp does not shift laterally.

In a possible implementation, the headlamp includes a plurality of lamp beads, and a part of the plurality of lamp beads is lit before the light is laterally shifted, and step 203 includes: the vehicle control unit determines an adjustment distance from a part of lit beads of the plurality of lamp beads based on an illumination distance of the headlamp, the offset distance and a focal length of the headlamp; the vehicle control unit determines target lamp beads from the plurality of lamp beads based on the part of lit beads of the plurality of lamp beads, the target direction and the adjustment distance; and the vehicle control unit turns off the part of lit beads of the plurality of lamp beads and then turns on the target lamp beads, to shift the light projected by the headlamp by the offset distance in the target direction.

The headlamp in the above solution includes a plurality of lamp beads arranged according to a target array. In some embodiments, the target array is a trapezoidal array.

The headlamp includes a high beam and a low beam, and the illumination distance of the high beam is different from that of the low beam. The illumination distance of the high beam is larger than that of the low beam.

In some embodiments, the illumination distance of the high beam in the vehicle is 100 meters, and the illumination distance of the low beam in the vehicle is 20 meters.

The vehicle control unit determines the target lamp beads from the plurality of lamp beads based on the part of lit beads of the plurality of lamp beads, the target direction and the adjustment distance specifically describes that the vehicle control unit determines the target lamp beads from the plurality of lamp beads based on a position of the part of lit beads of the plurality of lamp beads, the target direction and the adjustment distance. Once the part of lit beads of the plurality of lamp beads is determined, the position of the part of lit beads of the plurality of lamp beads can be determined.

In some embodiments, the sizes of the respective lamp beads among the plurality of lamp beads are the same, and the unit of the adjustment distance is a quantity of lamp beads.

In the above technical solution, the headlamp includes a plurality of lamp beads, the light projected by the headlamp is generated by lighting at least one lamp bead among the plurality of lamp beads, and before the light is laterally shifted, a part of the plurality of lamp beads is lit. Based on this, in order to shift the light by the offset distance in the target direction, in this solution, it is necessary to determine the adjustment distance by which the part of lit beads of the plurality of lamp beads is shifted; then the target lamp beads are determined from the plurality of lamp beads based on the part of lit beads of the plurality of lamp beads, the target direction and the adjustment distance; finally, the part of lit beads of the plurality of lamp beads is turned off and the target lamp beads are lit, so as to shift the light projected by the headlamp. That is, when no turning is performed, the part of lit beads of the plurality of lamp beads is lit; and when turning is performed, the part of lit beads of the plurality of lamp beads is turned off and the target lamp beads are lit, so as to achieve the lateral shifting of the light projected by the headlamp. In addition, since the illumination distance of the headlamp, the offset distance, the focal length of the headlamp and the adjustment distance from the part of lit beads of the plurality of lamp beads have a corresponding proportional relationship, the adjustment distance from the part of lit beads of the plurality of lamp beads can be determined based on the illumination distance of the headlamp, the offset distance and the focal length of the headlamp.

FIG. 4 is referred to in the following. FIG. 4 is a structural schematic diagram of a headlamp according to an embodiment of the present disclosure. Exemplarily, by taking the target array being a trapezoidal array and the quantity of lamp beads being 39 as an example, the structure of the headlamp is described. As shown in FIG. 4, it can be seen that the headlamp includes 39 lamp beads arranged according to the trapezoidal array. Lighting lamp beads at different positions can project light of different shapes.

In some possible implementations, the vehicle control unit determining the adjustment distance from the part of lit beads of the plurality of lamp beads based on the illumination distance of the headlamp, the offset distance and the focal length of the headlamp includes: the vehicle control unit determines a first ratio between the focal length and the illumination distance; and the vehicle control unit sets a product of the first ratio and the offset distance as the adjustment distance.

In the above technical solution, a proportional relationship between the focal length of the headlamp and the adjustment distance is the same as a proportional relationship between the illumination distance of the headlamp and the offset distance. Therefore, the first ratio between the focal length and the illumination distance can be determined; and the product of the first ratio and the offset distance is determined as the adjustment distance.

FIG. 5 is referred to in the following. FIG. 5 is a schematic diagram of determining target lamp beads according to an embodiment of the present disclosure. Exemplarily, by taking a lit part of the plurality of lamp beads being lamp beads 18 to 23 and lamp beads 32 to 39 as shown in FIG. 5, the target direction being a leftward direction, and the adjustment distance being 5 lamp beads as an example, the procedure of determining the target lamp beads is described.

Specifically, the vehicle control unit takes each lamp bead among lamp beads 18 to 23 and lamp beads 32 to 39 as a reference, moves 5 lamp beads leftward in the horizontal direction, and determines lamp beads 13 to 18 and lamp beads 27 to 34. The vehicle control unit determines lamp beads 13 to 18 and lamp beads 27 to 34 as the target lamp beads. As shown in FIG. 5, the lit part of the plurality of lamp beads includes lamp beads indicated by black solid-line frames, the target lamp beads are lamp beads indicated by gray dashed-line frames, and the black solid line with an arrow is used to indicate the adjustment distance.

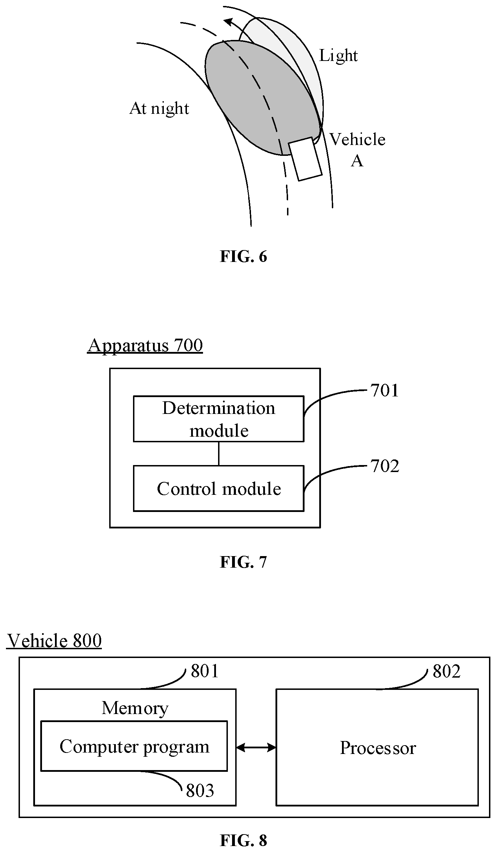

FIG. 6 is referred to in the following. FIG. 6 is a schematic diagram of laterally shifting light according to an embodiment of the present disclosure. Exemplarily, as shown in FIG. 6, an illumination region before the light projected by the headlamp moves is a light gray region in FIG. 1, and an illumination region after the light projected by the headlamp moves is a dark gray region in FIG. 6. The light in the light gray region is generated by projection of the lit part of the plurality of lamp beads, and the light in the dark gray region is generated by projection of the target lamp beads. When driving at night, the driver can clearly observe the road condition ahead under the light in the light gray region, reasonably control the vehicle, and thus ensure safe driving of the vehicle.

A detailed procedure of "turning on the respective lamp beads among the target lamp beads with different brightness" is described as follows.

In some possible implementations, the vehicle control unit turning on the target lamp beads includes: the vehicle control unit determines, from the target lamp beads, a first part of lamp beads for illuminating a first lane and a second part of lamp beads for illuminating a second lane where the vehicle travels, where the first lane is an inside lane of the second lane; and the vehicle control unit turns on the first part of lamp beads with a first brightness, and turns on the second part of lamp beads with a second brightness, where the first brightness is greater than the second brightness.

"The first lane being located on the inner side of the second lane" in the above solution specifically means being on an inner side of the curved section where the vehicle travels during turning.

In the above technical solution, the first part of lamp beads among the target lamp beads illuminates the inside lane (the first lane) of the vehicle, and the second part of lamp beads among the target lamp beads illuminates the second lane where the vehicle travels. Generally, when the vehicle turns, the driver pays more attention to traffic conditions in the inside lane of the vehicle. Therefore, the driver needs a clearer field of view for the inside lane than for the second lane, so the first part of lamp beads can illuminate the first lane with a higher brightness. In this way, when the vehicle turns, the probability of collision between the vehicle and obstacles on the inside lane can be reduced.

In some possible implementations, the vehicle control unit determining, from the target lamp beads, the first part of lamp beads for illuminating the first lane and the second part of lamp beads for illuminating the second lane where the vehicle travels includes: the vehicle control unit determines, based on the turning radius, a second ratio between a quantity of lamp beads for illuminating the first lane and a quantity of lamp beads for illuminating the second lane; and the vehicle control unit determines the first part of lamp beads and the second part of lamp beads respectively from the target lamp beads based on the second ratio, the quantity of the target lamp beads, and a position of the first lane relative to the second lane.

The quantity of the target lamp beads is the same as the quantity of the lit part of the plurality of lamp beads. The position of the first lane relative to the second lane in the above solution includes that the first lane is on the left side of the second lane and that the first lane is on the right side of the second lane.

In the above technical solution, when the vehicle turns, for different turning amplitudes, the front of the vehicle is biased differently toward different lanes. If the front of the vehicle is biased more toward the second lane, a blind spot in the field of view of the inside lane (the first lane) is relatively large, and more lamp beads are required to illuminate the inside lane. Therefore, the second ratio between the quantity of lamp beads for illuminating the first lane and the quantity of lamp beads for illuminating the second lane can be determined based on the turning radius. Then, the first part of lamp beads and the second part of lamp beads are respectively determined from the target lamp beads based on the second ratio, the quantity of the target lamp beads, and the position of the first lane relative to the second lane. This solution can accurately determine the first part of lamp beads for illuminating the first lane and the second part of lamp beads for illuminating the second lane.

In some embodiments, the vehicle control unit determining, based on the turning radius, the second ratio between the quantity of lamp beads for illuminating the first lane and the quantity of lamp beads for illuminating the second lane includes: the vehicle control unit determines the second ratio between the quantity of lamp beads for illuminating the first lane and the quantity of lamp beads for illuminating the second lane based on the turning radius and a third correspondence relationship between a reference turning radius and a reference ratio, where the reference ratio is a ratio between the quantity of sample lamp beads for illuminating the first lane and the quantity of sample lamp beads for illuminating the second lane.

The third correspondence relationship in the above solution is obtained through simulation, and verified through a simulated real-vehicle scenario. Specifically, in a real-vehicle scenario, when a first vehicle is controlled to turn left in its own lane (the second lane mentioned above) with a first reference turning radius, a first reference part of lamp beads among the target lamp beads is controlled to illuminate the first lane, and a second reference part of lamp beads among the target lamp beads is controlled to illuminate the own lane, where the first reference part of lamp beads is obtained by a product of the quantity of the target lamp beads and a first reference ratio, the first reference turning radius corresponds to the first reference ratio, and the sum of the quantity of the second reference part of lamp beads and the quantity of the first reference part of lamp beads is the quantity of the target lamp beads. It is determined whether the light projected by the first reference part of lamp beads completely covers the first lane, that is, whether there is a blind spot in the field of view in the adjacent lane on the left side of the own lane. If there is no blind spot in the adjacent lane, it is determined that the correspondence relationship between the first reference turning radius and the first reference ratio is verified.

In some possible implementations, the vehicle control unit determining the first part of lamp beads and the second part of lamp beads respectively from the target lamp beads based on the second ratio, the quantity of the target lamp beads, and the position of the first lane relative to the second lane includes: the vehicle control unit determines a first quantity of the first part of lamp beads and a second quantity of the second part of lamp beads based on the second ratio and the quantity of the target lamp beads; the vehicle control unit sets, in response to the first lane being on a left side of the second lane, lamp beads of a first quantity and located on the left side among the target lamp beads as the first part of lamp beads, and the vehicle control unit sets lamp beads other than lamp beads of the first quantity and located on the left side among the target lamp beads as the second part of lamp beads; and the vehicle control unit sets, in response to the first lane being on a right side of the second lane, lamp beads of a second quantity and located on the left side among the target lamp beads as the second part of lamp beads, and the vehicle control unit sets lamp beads other than lamp beads of the second quantity and located on the left side among the target lamp beads as the first part of lamp beads.

A detailed procedure of "controlling the light to shift laterally with different completion durations" is described as follows.

First: controlling the light to shift laterally based on a traveling speed of the vehicle.

In some possible implementations, step 203 includes: the vehicle control unit determines a target duration for laterally shifting the light projected by the headlamp based on a traveling speed of the vehicle and a second correspondence relationship between a reference speed and a reference duration during light shifting; and the vehicle control unit controls the light to shift by the offset distance in the target direction within the target duration.

The second correspondence relationship in the above solution is obtained through simulation, and verified through a simulated real-vehicle scenario. Specifically, in a real-vehicle scenario, when a first vehicle turns left in its own lane (the second lane mentioned above) with a first reference turning radius and a first reference traveling speed, the lamp beads are controlled to shift by the offset distance leftward in the horizontal direction within a first reference duration. It is determined whether the vehicle has passed the curved section of road and whether the driver feels dizzy. If the vehicle has not passed the curved section of road and the driver does not feel dizzy, it is determined that a correspondence relationship between the first reference traveling speed and the first reference duration is verified.

In the above technical solution, a completion time (the target duration) for shifting the light is controlled by a speed of the vehicle during turning. In this way, it can be achieved that: when the vehicle turns left at a relatively fast speed, the light is controlled to complete the leftward shifting within a relatively short duration; when the vehicle turns left at a relatively slow speed, the light is controlled to complete the leftward shifting within a relatively long duration. That is, the duration for completing the shifting of the light is adapted to the speed of the vehicle. This solution can avoid the driver feeling dizzy due to slow shifting when the speed of the vehicle is fast, and can also avoid potential driving safety hazards due to fast shifting when the speed of the vehicle is slow.

Second: controlling the light to shift laterally based on a turning duration.

In some possible implementations, step 203 includes: the vehicle control unit determines a traveling state of the vehicle based on a visual sensor on the vehicle; the vehicle control unit determines, in response to the traveling state indicating that a turning behavior of the vehicle is caused by a curved section of road where the vehicle travels, a shortest duration for passing the curved section of road; the vehicle control unit determines a product of the shortest duration and a preset factor as the target duration, where the preset factor is positively correlated with a road curvature of the curved section of road; and the vehicle control unit controls the light to shift by the offset distance in the target direction within the target duration.

"The traveling state indicating that the turning behavior of the vehicle is caused by the curved section of road where the vehicle travels" in the above solution means that the vehicle must turn when traveling on the curved section of road, otherwise it cannot pass the curved section of road.

In the above technical solution, the shortest duration for the vehicle to pass the curved section of road and the preset factor are used to control the completion time (target duration) for shifting the light. In this way, it can be achieved that: when the vehicle turns left on a curved section of road with a relatively large road curvature, the light is controlled to complete the leftward shifting within a relatively long duration; when the vehicle turns left on a curved section of road with a relatively small road curvature, the light is controlled to complete the leftward shifting within a relatively short duration. That is, the duration for completing the shifting of the light adapts to the road curvature of the curved section of road and the reference duration (the shortest duration for the vehicle to pass the curved section of road). This solution can avoid the situation where the vehicle passes the curved section of road in a very short time but the shifting of the light has not been completed yet, and can also avoid the situation where the vehicle passes the curved section of road in a very long time but the shifting of the light is completed in a very short time, causing the driver to feel dizzy.

In some embodiments, the visual sensor is various types of cameras on the vehicle.

In some embodiments, the vehicle control unit determining the shortest duration for passing the curved section of road includes: the vehicle control unit determines a ratio of a length of the curved section of road to a maximum allowable speed of the vehicle on the curved section of road as the shortest duration.

FIG. 7 is a structural schematic diagram of an apparatus for controlling light according to an embodiment of the present disclosure.

Exemplarily, as shown in FIG. 7, the apparatus 700 includes:
a determination module 701, configured to determine, in response to a headlamp of a vehicle being turned on and a steering operation performed on a steering wheel of the vehicle being detected, a turning radius of the vehicle; and determine, based on the turning radius, an offset distance by which light projected by the headlamp is shifted laterally; and
a control module 702, configured to control the light to shift by the offset distance in a target direction, where the target direction corresponds to a rotation direction of the steering wheel.

Optionally, the determination module 701 is specifically configured to: determine, in response to the steering operation performed on the steering wheel being detected, a rotation angle of a wheel based on a rotation angle of the steering wheel and a transmission ratio between the steering wheel and the wheel; and determine the turning radius based on a wheelbase of the vehicle and the rotation angle of the wheel.

Optionally, the determination module 702 is specifically further configured to: determine the offset distance based on the turning radius and a first correspondence relationship, where the first correspondence relationship is a correspondence relationship between a reference turning radius and a reference offset distance during light shifting; or determine a product of the turning radius and a preset coefficient as the offset distance.

Optionally, the headlamp includes a plurality of lamp beads, and a part of the plurality of lamp beads is lit before the light is laterally shifted, and the control module 702 is specifically configured to: determine an adjustment distance from a part of lit beads of the plurality of lamp beads based on an illumination distance of the headlamp, the offset distance and a focal length of the headlamp; determine target lamp beads from the plurality of lamp beads based on the part of lit beads of the plurality of lamp beads, the target direction and the adjustment distance; and turn off the part of lit beads of the plurality of lamp beads and then turn on the target lamp beads, to shift the light projected by the headlamp by the offset distance in the target direction.

Optionally, the determination module 701 is specifically further configured to: determine a first ratio between the focal length and the illumination distance; and set a product of the first ratio and the offset distance as the adjustment distance.

Optionally, the control module 702 is specifically further configured to: determine, from the target lamp beads, a first part of lamp beads for illuminating a first lane and a second part of lamp beads for illuminating a second lane where the vehicle travels, where the first lane is an inside lane of the second lane; and control the first part of lamp beads to be lit with a first brightness, and control the second part of lamp beads to be lit with a second brightness, where the first brightness is greater than the second brightness.

Optionally, the determination module 701 is specifically further configured to: determine, based on the turning radius, a second ratio between a quantity of lamp beads for illuminating the first lane and a quantity of lamp beads for illuminating the second lane; and determine the first part of lamp beads and the second part of lamp beads respectively from the target lamp beads based on the second ratio, the quantity of the target lamp beads, and a position of the first lane relative to the second lane.

Optionally, the determination module 701 is specifically further configured to: determine a first quantity of the first part of lamp beads and a second quantity of the second part of lamp beads based on the second ratio and the quantity of the target lamp beads; set, in response to the first lane being on a left side of the second lane, lamp beads of a first quantity and located on the left side among the target lamp beads as the first part of lamp beads, and set lamp beads other than lamp beads of the first quantity and located on the left side among the target lamp beads as the second part of lamp beads; and set, in response to the first lane being on a right side of the second lane, lamp beads of a second quantity and located on the left side among the target lamp beads as the second part of lamp beads, and set lamp beads other than lamp beads of the second quantity and located on the left side among the target lamp beads as the first part of lamp beads.

Optionally, the control module 702 is specifically further configured to: determine a target duration for laterally shifting the light projected by the headlamp based on a traveling speed of the vehicle and a second correspondence relationship between a reference speed and a reference duration during light shifting; and control the light to shift by the offset distance in the target direction within the target duration.

FIG. 8 is a structural schematic diagram of a vehicle according to an embodiment of the present disclosure.

Exemplarily, as shown in FIG. 8, the vehicle 800 includes: a memory 801 and a processor 802, where the memory 801 stores a computer program 803, and the processor 802 is configured to call and execute the computer program 803 to execute a method for controlling light.

In addition, the embodiment of the present disclosure further protects an apparatus, which may include a memory and a processor, where the memory stores executable program code, and the processor is configured to call and execute the executable program code to execute the method for controlling light provided by the embodiment of the present disclosure.

In this embodiment, functional module division can be performed on the apparatus according to the above method examples. For example, it may correspond to respective functional modules, or two or more functions may be integrated into one processing module, and the above integrated module may be implemented in the form of hardware. The module division in this embodiment is schematic and is only a logical function division, and there may be other division methods in actual implementation.

In the case where respective functional modules are divided corresponding to respective functions, the apparatus may further include a determination module, a control module, and the like. All relevant contents of the respective steps involved in the above method embodiments can be incorporated into the functional descriptions of the corresponding functional modules, and will not be repeated here.

The apparatus provided by this embodiment is used to execute the above method for controlling light, and thus can achieve the same effects as the above implementation method.

In the case of using an integrated unit, the apparatus may include a processing module and a storage module. When the apparatus is applied to a vehicle, the processing module can be used to control and manage actions of the vehicle. The storage module can be used to support the vehicle in executing mutual program codes, etc.

The processing module may be a processor or a controller, which can implement or execute various exemplary logic blocks, modules and circuits described in conjunction with the disclosure of the present disclosure. The processor may also be a combination that implements computing functions, for example, a combination including one or more microprocessors, a combination of a digital signal processing (DSP) and a microprocessor, and so on. The storage module may be a memory.

In addition, the apparatus provided by the embodiment of the present disclosure may specifically be a chip, a component or a module, and the chip may include an interconnected processor and a memory; where the memory is used to store instructions, and when the processor calls and executes the instructions, the chip can be caused to execute the method for controlling light provided by the above embodiments.

This embodiment further provides a computer-readable storage medium, where the computer-readable storage medium stores computer program code, and when the computer program code runs on a computer, the computer is caused to execute the relevant method steps described above to realize the method for controlling light provided by the above embodiments.

This embodiment further provides a computer program product, and when the computer program product runs on a computer, the computer is caused to execute the relevant steps described above to realize the method for controlling light provided by the above embodiments.

The apparatus, computer-readable storage medium, computer program product or chip provided by this embodiment are all used to execute the corresponding method provided above. Therefore, the beneficial effects that can be achieved can refer to the beneficial effects in the corresponding method provided above, and will not be repeated here.

Through the description of the above implementations, those skilled in the art can understand that, for the convenience and brevity of the description, only the division of the above functional modules is used as an example for illustration. In practical applications, the above functions can be assigned to different functional modules to be completed as needed, that is, the internal structure of the apparatus is divided into different functional modules to complete all or part of the functions described above.

In the embodiments provided by the present disclosure, the disclosed apparatus and method can be implemented in other ways. For example, the apparatus embodiments described above are merely schematic. For example, the division of modules or units is only a logical function division, and there may be other division methods in actual implementation. For example, a plurality of units or components may be combined or integrated into another apparatus, or some features may be omitted or not executed. In addition, the shown or discussed mutual coupling or direct coupling or communication connection may be indirect coupling or communication connection through some interfaces, apparatuses or units, and may be in an electrical, mechanical or other form.

The above contents are only specific implementations of the present disclosure, but the protection scope of the present disclosure is not limited thereto. Any person skilled in the art can easily think of changes or substitutions within the technical scope disclosed by the present disclosure, and these should be covered within the protection scope of the present disclosure. Therefore, the protection scope of the present disclosure should be based on the protection scope of the claims.

## Claims

1. A method for controlling light, **characterized by** comprising:
determining, in response to a headlamp of a vehicle being turned on and a steering operation performed on a steering wheel of the vehicle being detected, a turning radius of the vehicle;
determining, based on the turning radius, an offset distance by which light projected by the headlamp is shifted laterally; and
controlling the light to shift by the offset distance in a target direction, wherein the target direction corresponds to a rotation direction of the steering wheel.

2. The method according to claim 1, wherein determining, in response to the steering operation performed on the steering wheel of the vehicle being detected, the turning radius of the vehicle comprises:
determining, in response to the steering operation performed on the steering wheel being detected, a rotation angle of a wheel based on a rotation angle of the steering wheel and a transmission ratio between the steering wheel and the wheel; and
determining the turning radius based on a wheelbase of the vehicle and the rotation angle of the wheel.

3. The method according to claim 1, wherein determining, based on the turning radius, the offset distance by which the light projected by the headlamp is shifted laterally comprises:
determining the offset distance based on the turning radius and a first correspondence relationship, wherein the first correspondence relationship is a correspondence relationship between a reference turning radius and a reference offset distance during light shifting; or
determining a product of the turning radius and a preset coefficient as the offset distance.

4. The method according to claim 1, wherein the headlamp comprises a plurality of lamp beads, and a part of the plurality of lamp beads is lit before the light is laterally shifted, wherein controlling the light to shift by the offset distance in the target direction comprises:
determining an adjustment distance from a part of lit beads of the plurality of lamp beads based on an illumination distance of the headlamp, the offset distance and a focal length of the headlamp;
determining target lamp beads from the plurality of lamp beads based on the part of lit beads of the plurality of lamp beads, the target direction and the adjustment distance; and
turning off the part of lit beads of the plurality of lamp beads and then turning on the target lamp beads, to shift the light projected by the headlamp by the offset distance in the target direction.

5. The method according to claim 4, wherein determining the adjustment distance from the part of lit beads of the plurality of lamp beads based on the illumination distance of the headlamp, the offset distance and the focal length of the headlamp comprises:
determining a first ratio between the focal length and the illumination distance; and
setting a product of the first ratio and the offset distance as the adjustment distance.

6. The method according to claim 4, wherein turning on the target lamp beads comprises:
determining, from the target lamp beads, a first part of lamp beads for illuminating a first lane and a second part of lamp beads for illuminating a second lane where the vehicle travels, wherein the first lane is an inside lane of the second lane; and
turning on the first part of lamp beads with a first brightness, and turning on the second part of lamp beads with a second brightness, wherein the first brightness is greater than the second brightness.

7. The method according to claim 6, wherein determining, from the target lamp beads, the first part of lamp beads for illuminating the first lane and the second part of lamp beads for illuminating the second lane where the vehicle travels comprises:
determining, based on the turning radius, a second ratio between a quantity of lamp beads for illuminating the first lane and a quantity of lamp beads for illuminating the second lane; and
determining the first part of lamp beads and the second part of lamp beads respectively from the target lamp beads based on the second ratio, the quantity of the target lamp beads, and a position of the first lane relative to the second lane.

8. The method according to claim 7, wherein determining the first part of lamp beads and the second part of lamp beads respectively from the target lamp beads based on the second ratio, the quantity of the target lamp beads, and the position of the first lane relative to the second lane comprises:
determining a first quantity of the first part of lamp beads and a second quantity of the second part of lamp beads based on the second ratio and the quantity of the target lamp beads;
setting, in response to the first lane being on a left side of the second lane, lamp beads of a first quantity and located on the left side among the target lamp beads as the first part of lamp beads, and setting lamp beads other than lamp beads of the first quantity and located on the left side among the target lamp beads as the second part of lamp beads; and
setting, in response to the first lane being on a right side of the second lane, lamp beads of a second quantity and located on the left side among the target lamp beads as the second part of lamp beads, and setting lamp beads other than lamp beads of the second quantity and located on the left side among the target lamp beads as the first part of lamp beads.

9. The method according to any one of claims 1 to 8, wherein controlling the light to shift by the offset distance in the target direction comprises:
determining a target duration for laterally shifting the light projected by the headlamp based on a traveling speed of the vehicle and a second correspondence relationship between a reference speed and a reference duration during light shifting; and
controlling the light to shift by the offset distance in the target direction within the target duration.

10. An apparatus for controlling light, **characterized by** comprising:
a determination module, configured to: determine, in response to a headlamp of a vehicle being turned on and a steering operation performed on a steering wheel of the vehicle being detected, a turning radius of the vehicle; and determine, based on the turning radius, an offset distance by which light projected by the headlamp is shifted laterally; and
a control module, configured to control the light to shift by the offset distance in a target direction, wherein the target direction corresponds to a rotation direction of the steering wheel.

11. A vehicle, **characterized by** comprising:
a memory, configured to store executable program code; and
a processor, configured to call and execute the executable program code from the memory, to cause the vehicle to perform the method according to any one of claims 1 to 9.

12. A computer-readable storage medium, **characterized in that**, the computer-readable storage medium stores a computer program, and when the computer program is executed, the method according to any one of claims 1 to 9 is implemented.
